# EUROPEAN PATENT APPLICATION

(11) **EP 4 181 233 A1**
(43) Date of publication of application: **17.05.2023**
(21) Application number: 21837320.7
(22) Date of filing: 03.06.2021
(51) Int. Cl.: H01M 4/36, H01M 4/38, H01M 4/58, H01M 4/587

(54) **ACTIVE MATERIAL FOR BATTERY, COMPOSITE ACTIVE MATERIAL FOR BATTERY, AND SECONDARY BATTERY**

(30) Priority: 07.07.2020 JP 2020116972
(71) Applicant: DIC Corporation, Tokyo 174-8520 (JP)
(72) Inventor: MATSUKI, Koichiro, Sakura-shi, Chiba 285-8668 (JP); ZHU, Peixin, Sakura-shi, Chiba 285-8668 (JP); KAWASE, Kenichi, Sakura-shi, Chiba 285-8668 (JP)
(74) Representative: Schön, Christoph
(86) International application number: PCT/JP2021/021116
(87) International publication number: WO 2022/009572

(57) **Abstract**

An object of the present invention is to provide an active material for a battery that can improve discharge capacity to 800 mAh/g or more, for example, while retaining good initial Coulombic efficiency and cycle characteristics, a composite active material for a battery containing the same, and a secondary battery containing these in a negative electrode. The active material for a battery according to the present invention is an amorphous silicon-based material containing elements including Si, O, and C and has a ratio (A/B) between a total value A of respective peak integral values attributed to SiO₂C₂ and SiO₃C and a peak integral value B attributed to SiO₄ of 0.5 or more and 5.0 or less in a chemical shift range of 20 ppm to -150 ppm in a solid-state ²⁹Si-NMR spectrum.

## Description

### Technical Field

The present invention relates to an active material for a battery as an amorphous silicon-based material containing elements including Si, O, and C, a composite active material for a battery containing the same, and a secondary battery containing these in a negative electrode.

### Background Art

In recent years, there is an increasing demand for compact, high-capacity secondary batteries with the spread of portable electronic devices such as smartphones. Among these, secondary batteries such as lithium-ion batteries (may be denoted as LIBs) are being rapidly developed to electric vehicle (EV) and other applications. In secondary batteries, a distance that can be traveled on a single charge (a cruising range) is an important item in measuring the performance of electric vehicles. The performance of electric vehicles is supported by on-board battery performance, which refers to high capacity, high efficiency, and a high capacity retention rate.

In terms of charge-discharge capacity, tin (theoretical capacity: 994 mAh/g) and silicon (theoretical capacity: 4,199 mAh/g) have been the subject of many studies because of their high theoretical capacities compared to conventional carbon materials (theoretical capacity of graphite: 372 mAh/g). However, tin-based materials and silicon materials have a problem in that the pulverization or the like of active materials occurs during charging and discharging and cannot thus avoid a decrease in charge-discharge capacity. Although many solutions to the problem have been developed, they have not been put into practical use and are currently still being improved.

On the other hand, as a material that is inferior to silicon materials in terms of capacity but has fewer material degradation phenomena such as volume expansion during lithium storage associated with side reaction behavior and the like occurring during charging and discharging, a high-temperature fired product of an organosilicon compound having direct bonding of silicon and carbon has been developed to contribute to an improved capacity retention rate (PTL 1 below).

For materials containing silicon (Si), oxygen (O), and carbon (C), there have also been many developments to perform material development with a high capacity retention rate while retaining certain charge-discharge capacity. Examples thereof include an active material containing particles in which a composition phase represented in the composition formula SiOxCy (0.2 ≤ x ≤ 3.1 ≤ y ≤ 5) is dispersed in a carbonaceous phase (PTL 2 below), an active material in which a cross-linked product obtained by curing reactive silane and siloxane having cross-linking groups is fired in an inert atmosphere at 700 to 1,400°C (PTL 3 below), and an active material containing silicon, carbon, and oxygen with a carbon content of 0.2 to 10 mol%, an oxygen content of 0.5 to 40 mol%, and a Si-C bond of 0.1 to 17.29 mol% or less with respect to silicon atoms (PTL 4 below).

### Citation List

### Patent Literature

PTL 1: Japanese Unexamined Patent Application Publication No. H5-144474
PTL 2: Japanese Unexamined Patent Application Publication No. 2003-197193
PTL 3: Japanese Unexamined Patent Application Publication No. 2006-062949
PTL 4: Japanese Unexamined Patent Application Publication No. 2009-283366

### Summary of Invention

### Technical Problem

However, with regard to the active materials in the secondary batteries described in PTL 1 to PTL 4 above, there are no materials that have simultaneously improved charge-discharge capacity, initial Coulombic efficiency (initial efficiency), and cycle characteristics (capacity retention rate characteristics), and in particular the discharge capacity is estimated to be less than 800 mAh/g, raising a challenge that they have much lower discharge capacity than that of silicon materials.

In view of the above circumstances, an object of the present invention is to provide an active material for a battery that can improve discharge capacity to 800 mAh/g or more, for example, while retaining good initial Coulombic efficiency and cycle characteristics, a composite active material for a battery containing the same, and a secondary battery containing these in a negative electrode.

### Solution to Problem

In order to achieve the object, the inventors of the present invention have earnestly studied to find out that the object can be achieved by containing an active material for a battery having a specific microstructure in an amorphous silicon-based material containing elements including Si, O, and C to reach the present invention.

Specifically, the present invention is as follows.
Item 1. An active material for a battery being an amorphous silicon-based material containing elements including Si, O, and C,
   the active material having a ratio (A/B) between a total value A of respective peak integral values attributed to SiO₂C₂ and SiO₃C and a peak integral value B attributed to SiO₄ of 0.5 or more and 5.0 or less in a chemical shift range of 20 ppm to -150 ppm in a solid-state ²⁹Si-NMR spectrum.
Item 2. The active material according to Item 1, in which the active material for a battery has a weight reduction starting temperature of 550°C or higher when the active material is thermally decomposed in the air.
Item 3. The active material for a battery according to Items 1 or 2, in which the active material has a weight reduction of 2 wt% or more and 30 wt% or less when the active material is thermally decomposed in the air.
Item 4. The active material for a battery according to any one of Items 1 to 3, in which the active material has a peak intensity ratio (G/D) between the G-band of carbon positioned near 1,595 cm⁻¹ and the D-band of carbon positioned near 1,320 cm⁻¹ of 0.8 or less in a Raman spectrum of the active material.
Item. 5. A secondary battery containing the active material according to any one of Items 1 to 4 in a negative electrode.
Item 6. A composite active material for a battery containing the active material according to any one of Items 1 to 4 in part of a component.
Item 7. A composite active material for a battery containing at least one carbon material selected from graphite, low-crystallinity carbon, and amorphous carbon in a component of the composite active material according to Item 6.
Item 8. A composite active material for a battery containing silicon particles with an average particle size of 150 nm or less in a component of the composite active material according to Item 6 or 7.
Item 9. A secondary battery containing the composite active material according to any one of Items 6 to 8 in a negative electrode.

### Advantageous Effects of Invention

The secondary battery including the negative electrode containing the active material for a battery according to the present invention can retain good initial Coulombic efficiency and cycle characteristics and can further improve discharge capacity to 800 mAh/g or more, for example.

### Brief Description of Drawings

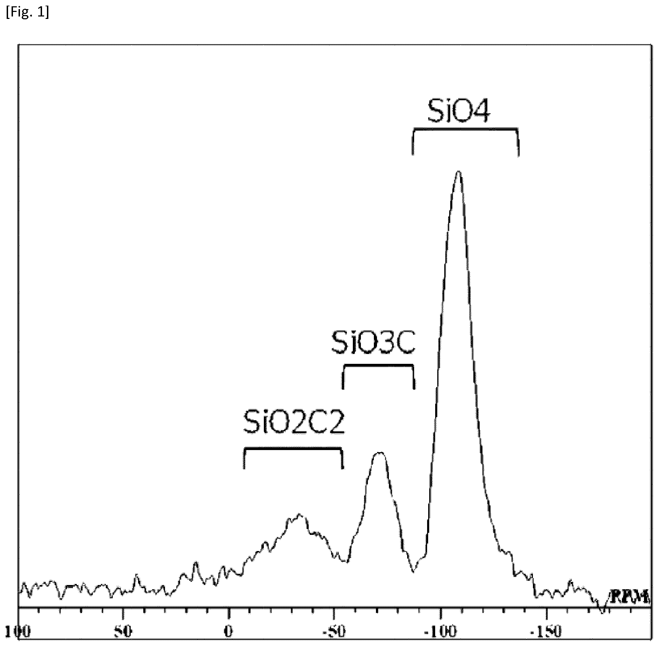

FIG. 1 is chart diagram of a solid-state ²⁹Si-NMR spectrum of an active material for a battery in Example 1. Description of Embodiments

### <Active Material for Battery>

The active material for a battery according to the present invention is an amorphous silicon-based material containing elements including Si, O, and C, mainly contains silicon oxycarbide (SiOC), and has a three-dimensional network structure formed of Si, O, and C elements. From the type of atoms bonded to Si (O or C) and the number of bonds with each atom, silicon oxycarbide can be mainly divided into three types, which are denoted as SiO₂C₂, SiO₃C, and SiO₄. Si bonded to these O and C in various ratios is further randomly bonded to each other to form SiOC. The active materials for a battery according to the present invention has a ratio (A/B) between a total value A of respective peak integral values attributed to SiO₂C₂ and SiO₃C and a peak integral value B attributed to SiO₄ of 0.5 or more and 5.0 or less in a chemical shift range of 20 ppm to -150 ppm in a solid-state ²⁹Si-NMR spectrum.

In a charge-discharge process of a lithium-ion secondary battery, taking a case of a negative electrode containing carbon as an active material as an example, during charging, carbon and lithium ions produce chemical bonds through an insertion reaction, and carbon captures lithium. During discharging, lithium captured by carbon becomes lithium ions through the release of electrons and undergoes a desorption reaction to leave carbon. The repetition of insertion and desorption reactions between carbon and lithium ions, that is, the reversible proceeding of the reactions performs charging and discharging. In the case of SiOC, which is the active material according to the present invention, SiO₂C₂, SiO₃C, and SiO₄ are randomly bonded to each other to form one active material. SiO₂C₂ and SiO₃C can make the insertion and desorption reactions with lithium ions proceed reversibly, whereas SiO₄, because it produces a silicate compound with some lithium ions, may make the insertion and desorption reactions of lithium ions partially irreversible.

To add a description more specifically, SiOC causes fluctuations in the electron distribution inside SiOC by the approach of lithium ions, and electrostatic bonds and coordination bonds are formed between SiOC and lithium ions, and thus lithium ions are stored in the skeleton of SiOC. These coordination bond energies are relatively low, and thus the desorption reaction of lithium ions is easily performed. In other words, SiOC can reversibly cause the insertion and desorption reactions of lithium ions during charging and discharging. Thus, by understanding this mechanism, we have found out that the total value of the respective amounts of SiO₂C₂ and SiO₃C present with respect to the amount of SiO₄ present strongly contributes to improvement in reversible capacity, and a larger total value can further improve the reversible capacity and further improve initial Coulombic efficiency.

On the other hand, with a large amount of SiO₄ present, when electrostatic bonds or coordination bonds are formed between SiOC and lithium ions, a chemical reaction between SiO₄ and lithium ions easily occurs, and a lithium silicate compound with high chemical stability is produced, and thus some lithium ions are fixed to the SiO₄.

Thus, from the mechanism, reducing the amount of SiO₄ present can improve the reversible charge-discharge capacity of the silicon material. However, when all the bonds with Si are formed with O atoms as in SiO₄, the chemical bond energy is higher than when even one Si-C bond is present, and even if lithium ions do not desorb from SiO₄, it is thought that there is a function of retaining the skeleton structure of the silicon material, causing SiOC to significantly contribute to improvement in the capacity retention rate of the active material. Thus, SiO₄ is an essential structure in the SiOC active material according to the present invention.

In other words, a larger total value of the respective amounts of SiO₂C₂ and SiO₃C present with respect to the amount of SiO₄ present leads to more improvement in the reversible charge-discharge capacity, but if it is extremely large, improvement in cycle characteristics will be hindered. On the other hand, a smaller total value further improves the cycle characteristics, but if it is extremely small, improvement in the reversible charge-discharge capacity will be hindered. Because of the material having these properties, a specific ratio between the total value of the respective amounts of SiO₂C₂ and SiO₃C present and the amount of SiO₄ present, which will be described below, is a significantly important factor. The respective amounts of SiO₂C₂, SiO₃C, and SiO₄ present can be quantified by solid-state ²⁹Si-NMR measurement.

The structure of the amorphous silicon-based material according to the present invention can be identified by ²⁹Si-solid-state NMR measurement. The active material for a battery according to the present invention is an active material in which a ratio (A/B) between a total value A of respective peak integral values attributed to SiO₂C₂ and SiO₃C and a peak integral value B attributed to SiO₄ indicates a range of 0.5 or more and 5.0 or less in a chemical shift range of 20 ppm to -150 ppm in a solid-state ²⁹Si-NMR spectrum of the material. FIG. 1 illustrates an example of the solid-state ²⁹Si-NMR spectrum in the active material for a battery according to the present invention.

In the solid-state ²⁹Si-NMR spectrum, as illustrated in FIG. 1, the chemical shifts of the peaks attributed to SiO₂C₂, SiO₃C, and SiO₄ are observed at approximately -20 ppm to -50 ppm, -50 ppm to -90 ppm, and -90 ppm to -140 ppm, respectively. However, each peak changes in chemical shift due to surrounding environmental conditions or the like in which SiOC is present, and thus analyzing the solid-state ²⁹Si-NMR spectrum in consideration of various conditions indicates the peaks attributed to SiO₂C₂, SiO₃C, and SiO₄, which are not necessarily present within the ranges of the value of the chemical shift described above, and the ratio (A/B) can be determined by calculating the integral values of the respective peaks correctly attributed from various sample conditions and measurement conditions. The respective integral values in the solid-state ²⁹Si-NMR spectrum represent respective molar ratios in the amorphous silicon-based material. Thus, the ratio (A/B) means the total molar ratio of SiO₂C₂ and SiO₃C with respect to 1 molar ratio of SiO₄. The ratio (A/B), that is, the molar ratio being 0.5 or more and 5.0 or less can retain good initial Coulombic efficiency and cycle characteristics and can further improve discharge capacity to 800 mAh/g or more, for example.

From the ²⁹Si-solid-state NMR spectrum, the peaks of SiC₄ and SiOC₃ may appear in 40 ppm to -20 ppm. Each peak appears around 10 ppm to -20 for SiC₄ and around 40 ppm to - 20 ppm for SiOC₃. There are thus regions in which the peaks overlap each other, making it difficult to accurately specify quantitative values from the ²⁹Si-solid-state NMR spectrum. Furthermore, it is known that SiC₄ does not undergo insertion and desorption reactions with lithium ions. SiOC₃ undergoes insertion and desorption reactions with lithium ions, but is generally present in a small amount. Ideally, it is easily thought that a range is specified by adding the peak integral value of SiOC₃ to the total value A and adding the peak integral value of SiC₄ to the total value B, for example, which is useful as an improvement condition for charge-discharge characteristics. However, it is impractical to consider the peak integral values of SiC₄ and SiOC₃ for the above reason, and thus the ratio (A/B) between the total value A of the respective peak integral values attributed to SiO₂C₂ and SiO₃C and the peak integral value B attributed to SiO₄ is determined to be a range of 0.5 or more and 5.0 or less as described above.

### (Precursor)

The SiOC described above can be formed by firing a silane compound as a precursor of the SiOC described above in an inert gas atmosphere. The silane compound contains a molecular structure with a Si-O bond and a Si-C bond as basic structures. By designing and adjusting the molecular structure of the precursor, the skeletal structure of SiOC after high-temperature firing in an inert gas atmosphere can be controlled, thus giving a structure having a SiOC skeleton closely correlating with the precursor molecular structure.

The precursor is preferably a molecular structure containing a Si-O bond and a Si-C bond, and it is more preferable that the Si-O bond and the Si-C bond are in the same molecule.

As an example, it preferably has a structural unit containing General Formula (S-1) below and/or General Formula (S-2) below, and/or General Formula (S-3) below, and/or General Formula (S-4) below, and/or a combination of these general formulae below: 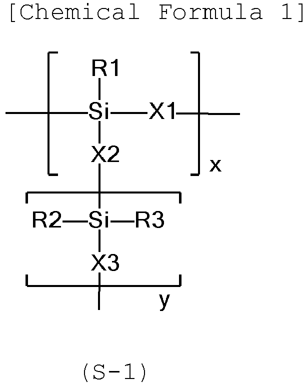 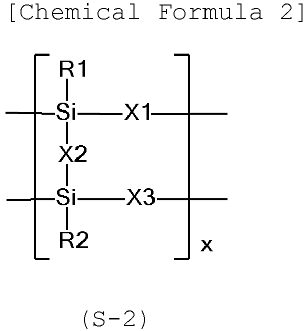 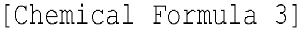 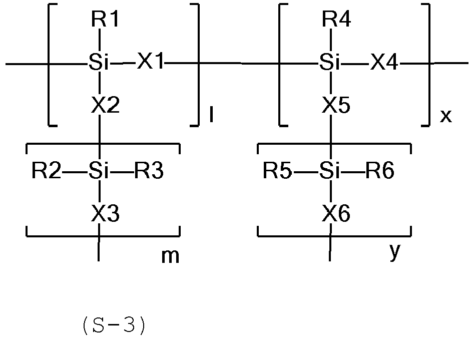 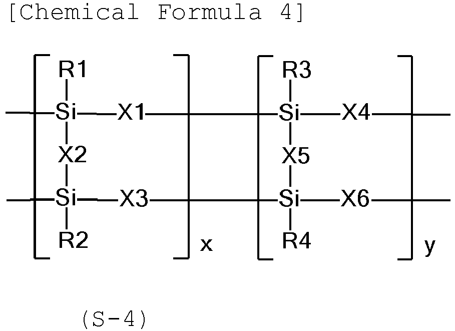 where in General Formulae (S-1), (S-2), (S-3), and (S-4) above, R1, R2, R3, R4, R5, and R6 are all monovalent substituents, examples of which are each independently a hydrogen atom, a hydroxy group, a hydrolyzable group, an aliphatic hydrocarbon group, an unsaturated hydrocarbon group, aromatic hydrocarbons, an aralkyl group, an acyl group, or a monovalent substituent having the following functional group (the functional group is a vinyl group, a (meth)acrylic group, an amino group, a glycidyl group, or a thiol group); X1, X2, X3, X4, X5, and X6 are all divalent substituents, each independently indicating an oxygen atom, alkylenes, alkenes, alkynes, divalent aromatics, ethers, ketones, esters, secondary amines, amides, or divalent substituents as a combination of these; and l, m, x, and y indicate integers of 0 or more.

When there are a plurality of groups indicated by the symbols such as R1 and X1 in General Formulae (S-1), (S-2), (S-3) and (S-4) above, they are independent of each other and may be the same as each other or different from each other.

Examples of the hydrolyzable group include halogen atoms such as chlorine, bromine, and iodine, alkoxy groups such as a methoxy group, an ethoxy group, a propoxyl group, a butoxy group, a pentoxy group, and a hexyloxy group, an acyloxy group, a phenoxy group, a naphthoxy group, an anthracenoxy group, a pentacenoxy group, an allyloxy group, an iminooxy group, an alkenyloxy group, an acyloxy group, an alkenyloxy group, an amino group, an amide group, an aminooxy group, and a mercapto group. Among them, a methoxy group and an ethoxy group are preferred.

By these groups being hydrolyzed, hydrolyzable silyl groups form siloxane bonds by a condensation reaction, or unreacted portions remain intact or become hydroxy groups. In parallel with the thermosetting reaction, a hydrolytic condensation reaction proceeds between hydroxy groups and unreacted hydrolyzable group to obtain a solid polysiloxane compound.

Examples of the aliphatic hydrocarbon group include C₁₋₃₀ linear or branched alkyl groups such as a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, a 1-ethyl-1-methylpropyl group, a heptyl group, an octyl group, a decyl group, a dodecyl group, a myristyl group, a palmityl group, a stearyl group, an isostearyl group, and a behenyl group. Examples of the cycloalkyl group include C₃₋₃₀ cycloalkyl groups such as a cyclopropyl group, a cyclobutyl group, a cyclopentyl group, and a cyclohexyl group. Among them, the cycloalkyl group is preferably a methyl group and an ethyl group.

Examples of the unsaturated hydrocarbon group include C₂₋₃₀ alkenyl groups such as a vinyl group, an allyl group, and a butenyl group, and a vinyl group and a (meth)acryloyl group, which overlap a monovalent substituent having a functional group described below. Among them, a vinyl group and an allyl group are preferred.

Examples of the aromatic hydrocarbon group include C₆₋₃₀ aryl groups such as a phenyl group, a tolyl group, a xylyl group, a naphthyl group, a styryl group, a 4-vinylphenyl group, and a 3-isopropylphenyl group. Among them, the aromatic hydrocarbon group is preferably a phenyl group.

Examples of the aralkyl group include a benzyl group, a diphenylmethyl group, and a naphthylmethyl group. A benzyl group is preferred. Example of the acyl group include aliphatic monocarboxylic acid acyl groups such as a formyl group, an acetyl group, a propionyl group, a butyryl group, a valeryl group, a pivaloyl group, a lauroyl group, a myristoyl group, a palmitoyl group, and a stearoyl group and aromatic ring-containing acyl groups such as a benzoyl group and a cinnamoyl group. Aliphatic monocarboxylic acid acyl groups are preferred, and an acetyl group is more preferred.

Examples of the functional group in the monovalent substituent having a functional group include a vinyl group, a (meth)acrylic group, an amino group, a glycidyl group, and a thiol group. Specific examples thereof include vinyltrialkoxysilane, (meth)acryloxypropyltrialkoxysilane, aminooxypropyltrialkoxysilane, glycidyloxypropyltrialkoxysilane, glycidyloxypropylmethyldialkoxysilane, epoxycyclohexyltrialkoxysilane, thiolpropyltrialkoxysilane, and p-styryltrialkoxysilane. Two or more functional groups are preferably present in the polysiloxane segment, 3 to 200 are more preferably present, and 3 to 50 are even more preferably present. Heat treatment on the polysiloxane compound prior to thermal decomposition with two or more functional groups being present allows a cross-linking reaction to proceed, making it solid, which can facilitate thermal decomposition treatment.

Examples of the divalent substituent include divalent substituents having an oxygen atom, alkylenes, alkynes, divalent aromatics, ethers, ketones, esters, secondary amines, and amides as described above. Specific examples thereof include alkylenes such as methylene, ethylene, propylene, butylene, pentylene, hexylene, heptylene, octylene, nonylene, decylene, and cyclohexylene; alkynes such as alkenes including vinylene, isoprene, butene, butadiene, pentene, hexene, heptene, octene, nonene, and decene, ethine, propine, butyne, pentyne, and hexyne; and divalent aromatics such as phenylene, biphenylene, alkylbenzenes, dialkylbenzenes, alkynylbenzenes, dialkynylbenzenes, and naphthylene. Among them, alkylenes, alkenes, and divalent aromatics are preferred, and ethylene and phenylene are particularly preferred.

The precursor can be produced by known methods, and some preferred methods of production are exemplified below as (1), (2), and (3). However, the method of production is not limited to these examples.

(1) A method for producing a silane compound as a precursor by performing a hydrolytic condensation reaction on one or more substituents described above and one or more silane compounds having one or more hydrolyzable groups in an organic solvent in the presence of a catalyst as needed.
   When the hydrolyzable group is halogen, the catalyst is preferably non-catalyst, alkali metal hydroxides, amines, or the like. For other hydrolyzable groups, acidic catalysts or alkaline catalysts are suitably used. Phosphoric acid, hydrochloric acid, sulfuric acid, p-toluenesulfonic acid, and the like are preferred as acidic catalysts and amines, sodium hydroxide, and potassium hydroxide are preferred as alkaline catalysts.
(2) A method for producing a silane compound as a precursor by performing a silylation reaction on a siloxane compound having the substituent described above and a hydroxysilyl group and a siloxane compound having the substituent described above and a vinylsilyl group or an allylsilyl group in an organic solvent using a platinum catalyst such as platinum chloride or an organoplatinum complex.
(3) A method for producing a silane compound as a precursor by performing a silylation reaction on the substituent and the hydrolyzable group described above, a hydroxysilyl compound, and a silane compound having the substituent and the hydrolyzable group described above and a vinylsilyl group or an allylsilyl group in an organic solvent using a platinum catalyst such as platinum chloride or an organoplatinum complex and then forming siloxane bonds using the acidic catalyst or the alkaline catalyst described above in order to perform a hydrolysis reaction.

The solvent is preferably aromatics, alcohols, ketones, esters, aliphatic amines, aromatic amines, amides, nitriles, sulfides, or the like. In particular, more preferred are toluene, xylene, ethyl alcohol, isopropyl alcohol, butyl alcohol, methyl ethyl ketone, methyl isobutyl ketone, ethyl acetate, butyl acetate, trimethylamine, triethylamine, tributylamine, piperidine, pyridine, pyrrole, imidazole, dimethylformamide, dimethylacetamide, methylpyrrolidine, methylpyrrolidone, acetonitrile, and dimethylsulfoxide.

### (Free Carbon F)

In the active material for a battery according to the present invention, the amorphous silicon-based material has a skeletal portion containing only carbon as well as a SiOC skeletal structure and the like. Some carbon atoms are bonded to some Si atoms in the SiOC skeleton, which is called free carbon and is a component having influence on the charge-discharge characteristics. In the following, the free carbon is denoted as free carbon F. The free carbon F is formed in the aggregate of SiOC containing SiO₂C₂, SiO₃C, and SiO₄ and is bonded to some Si atoms of the SiOC, which facilitates electron transfer between Si atoms inside and on the surface of SiOC and the free carbon F. Thus, the insertion and desorption reactions of lithium ions during charging and discharging proceed quickly, which can be considered to improve the charge-discharge characteristics of the SiOC active material. In addition, although the SiOC active material may expand and contract, although only slightly, due to the insertion and desorption reactions of lithium ions, the presence of the free carbon F in its vicinity mitigates the expansion and contraction of the entire active material, which has the effect of greatly improving cycle characteristics.

The free carbon F is formed associated with thermal decomposition of the precursor silane compound in an inert gas atmosphere. The free carbon F specifically becomes a carbon component by high-temperature thermal decomposition in an atmosphere in which carbonizable sites and substituents in the molecular structure of the silane compound are inactivated, and part of the carbon is bonded to part of the SiOC skeleton. The carbonizable components are not limited to a particular component and are preferably hydrocarbons, more preferably alkyls, alkylenes, alkenes, alkynes, and aromatics, and even more preferably aromatics.

The amount of the free carbon F is an important parameter for the charge-discharge characteristics of the active material. An insufficient amount of carbon may result in poor conductivity and deteriorated charge-discharge characteristics. On the other hand, if the amount of free carbon F is extremely large, the charge-discharge capacity of the active material as a whole decreases because the theoretical capacity of the free carbon F itself is low.

The presence state of the free carbon F can be identified by thermal analysis (TG-DTA). Unlike the C atoms in the SiOC skeleton, the free carbon F is easily thermally decomposed in the air, and the amount of total free carbon present can be determined by a thermal weight reduction measured in the presence of air. That is, the total free carbon amount can be quantified by using a thermogravimeter-differential thermal analyzer (TG-DTA). Changes in thermal decomposition temperature behavior (a decomposition reaction starting temperature, a decomposition reaction ending temperature, the number of thermal decomposition reaction species, the temperature of a maximum weight reduction in each of the thermal decomposition reaction species, and the like) obtained from thermal weight reduction behavior from the measurement can also be easily determined, and the state of the free carbon F can be determined using these temperature values. On the other hand, the C atoms in the SiOC skeleton, that is, the carbon atoms bonded to the Si atoms forming SiO₂C₂, SiO₃C, and SiO₄ described above have very strong chemical bonds, thus have high thermal stability, and are considered not to be thermally decomposed in the air in the measurement temperature range of the thermal analyzer. The free carbon F formed by the thermal decomposition of an organosilane compound as the precursor in an inert gas atmosphere has characteristics similar to those of hard carbon and thus causes a rapid weight reduction as it is thermally decomposed in the air in an approximate temperature range of 550°C to 900°C. While the highest temperature for the TG-DTA measurement condition is not limited to a particular temperature, in order to completely end the thermal decomposition reaction of all the free carbon, the TG-DTA measurement is preferably performed under the condition of being in the air and room temperature (about 25°C) to 1,000°C or higher.

The active material for a battery according to the present invention when containing a certain amount or more of the free carbon F preferably has a thermal weight reduction starting temperature of 550°C or higher when the active material is thermally decomposed in the air. When the free carbon F is contained, the thermal weight reduction is preferably 2 wt% or more and 30 wt% or less and more preferably 3 wt% or more and 25 wt% or less for the reason described above.

When the active material has the free carbon F, the state of the free carbon can be determined by Raman spectrometry apart from the thermal analytic means described above. In a Raman spectrum, a peak intensity ratio G/D between the G-band of carbon positioned near 1,590 cm⁻¹ (the graphite long-period carbon lattice structure) and the D-band of carbon positioned near 1,350 cm⁻¹ (the graphite short-period carbon lattice structure with disorder and defects) is preferably 0.8 or less and more preferably 0.6 or more and 0.8 or less. When G/D is within this range, the configuration of the long-period structure and the short-period structure of the free carbon is balanced, and electron transfer between SiOC₃, SiO₂C₂, SiO₃C, and SiO₄ described above and the free carbon is promoted, which is preferred.

### <Composite Active material for Battery>

The composite active material for a battery according to the present invention is not limited to a particular composite active material for a battery so long as it contains the active material for a battery according to the present invention in part of components, but as a component, at least one carbon material selected from graphite, low-crystallinity carbon, and amorphous carbon, which are generally used for negative electrode materials for batteries, is preferably mixed before firing or after firing. By containing these various carbon materials, they can be selected in accordance with respective characteristics, and favorable characteristics can be exhibited. As an example, combining with high-crystallinity carbon materials such as graphite improves the initial Coulombic efficiency, the cycle characteristics (life), and the capacity retention rate, which is preferred. The proportion of these carbon materials is, for example, 1 to 80% by weight and preferably 5 to 60% by weight with respect to the entire amount of the composite active material.

### (Free carbon G)

At least one carbon material selected from graphite, low-crystallinity carbon, and amorphous carbon has the characteristics described above and behaves as a sole carbon component, or free carbon, in the active material. However, the free carbon has no bond with Si atoms in SiOC and is different from the carbon component in which some carbon atoms in the free carbon are bonded to some Si atoms in SiOC to form a close presence with SiOC described in the free carbon F. Thus, the free carbon that has no bond with Si atoms in SiOC is hereafter denoted as free carbon G. The free carbon G improves the initial Coulombic efficiency and the capacity retention rate as described above due to the resistivity reduction effect of the entire active material. However, compared to the characteristics of the free carbon F described above, the improvement of the charge-discharge characteristics of the SiOC active material must be a limited effect. However, assuming the presence of the free carbon F bonded to some Si atoms in SiOC, a combination of the additional free carbon G is important as a carbon component to further improve the charge-discharge characteristics.

### ((SiOC/Carbon Source Resin/Si) Three-Component System)

The composite active material for a battery according to the present invention is not limited to a particular composite active material for a battery so long as it contains the active material for a battery according to the present invention in part of components, but it is preferable to contain the carbon material described above as a component, and as a method for containing the carbon material, apart from the method of directly mixing the carbon material as described above, a carbon source resin to become the carbon material by being fired may be mixed therewith and dispersed therein before firing. While the carbon source resin is not limited to a particular carbon source resin so long as it has good miscibility with the polysiloxane compound and is carbonized by high-temperature firing in an inert atmosphere, synthetic resins having aromatic functional groups as well as natural raw materials or the like are preferably used. Examples of the synthetic resins include phenolic resins, polystyrene, polyphenylene ether, and polyphenylene sulfide. The use of phenolic resins is more preferable from the viewpoint of inexpensive availability and exclusion of impurities.

The composite active material for a battery according to the present invention may contain silicon (zero-valent) particles with an average particle size [volume average particle size (D50)] of 150 nm or less as a component. Containing such silicon particles has the effect of improving the initial charge-discharge performance (the charge-discharge capacity and the initial Coulombic efficiency) of the active material as described above. Because of correlation with the cycle characteristics of the active material, the average particle size (D50) of the silicon particles is preferably 10 to 150 nm and more preferably 15 to 120 nm. The average particle size of the silicon particles can be measured by dynamic light scattering using a laser diffraction and scattering particle size distribution measurement apparatus or the like. The silicon particles with a large size exceeding 150 nm form large lumps, easily cause a pulverization phenomenon during charging and discharging, and are thus presumed to tend to reduce the charge-discharge performance of the active material. The silicon particles with a small size less than 10 nm are extremely fine, and thus the silicon particles tend to easily aggregate with each other. Thus, it is difficult to uniformly disperse the small-particle silicon into the active material, and in addition, the surface active energy of the fine particles is high, and thus the surface of the silicon particles is easily oxidized, and in addition, there is also a tendency for more by-products and the like to be on the surface of the small-particle silicon by high-temperature firing of the active material, which leads to a significant decrease in the charge-discharge performance.

The shape of the silicon particles that can be contained in the composite active material for a battery according to the present invention is not limited to a particular shape. They preferably have a sheet shape as an example and preferably have a length in a long axis direction of 50 to 300 nm and a thickness of 1 to 60 nm. In the present invention, the sheet shape indicates, in particular, that the thickness/length (what is called an aspect ratio) is 0.5 or less. The silicon particles with a large size with an aspect ratio exceeding 0.5 form large lumps, easily cause a pulverization phenomenon during charging and discharging, and are thus presumed to tend to reduce the charge-discharge performance of the active material.

As to the morphology of the silicon particles having a sheet shape, their average particle size can be measured by dynamic light scattering. By using observation and analytic means of a transmission electron microscope (TEM) or a field emission scanning electron microscope (FE-SEM), the morphology (size, shape, and the like) of a sample such as the thickness/length described above can be observed more easily and precisely. In the case of negative electrode active material powder encapsulating sheet-shaped silicon nanoparticles, a sample can be cut with a focused ion beam (FIB) or the like, and its section can be observed with an FE-SEM, or the sample can be sliced to observe the state of the silicon particles by TEM observation. The size range of the silicon particles defined in the present invention is a calculation result based on 50 particles in a main part of the sample within the field of view in a TEM image. Because of the limitations of the field of view of observation, it is acceptable for the silicon particles according to the present invention to have sizes outside the above range. The silicon particles have a silicon purity of preferably 97% or more and more preferably 99.0% or more.

As components of the composite active material for a battery according to the present invention, when the carbon material and the silicon particles are contained, when the carbon material is contained as the carbon source resin in the precursor, it is preferable to set the addition amount of the silicon particles to 3 to 50% by mass, to contain 15 to 85% by mass of the solid content of the silane compound, and to set the solid content of the carbon source resin to 3 to 70% by mass, and it is more preferable to set the addition amount of the solid content of the silicon particles to 8 to 40% by mass, the solid content of the silane compound to 20 to 70% by mass, and the solid content of the carbon source resin to 3 to 60% by mass with respect to the entire weight of the precursor.

### (Negative Electrode)

In the secondary battery according to the present invention, the negative electrode is obtained by applying slurry containing the active material for a battery according to the present invention or the composite active material for a battery according to the present invention as an essential component and other components such as organic binding agents (binders) and conductivity aids as needed onto a current collector copper foil to make a thin film.

### <Secondary Battery>

The secondary battery according to the present invention is not limited to a particular secondary battery so long as it contains the active material for a battery according to the present invention or the composite active material for a battery according to the present invention in the negative electrode. The secondary battery according to the present invention generally has a structure in which a positive electrode, the negative electrode, and a separator, which is provided as needed, are wound into a flat spiral shape to make a wound electrode plate group, or they are stacked in a flat plate shape to make a laminated electrode plate group or the like, and these electrode plate groups are encapsulated in an outer casing together with an electrolyte. When used for a wet electrolyte secondary battery, for example, the secondary battery according to the present invention can be configured by placing a positive electrode and the negative electrode according to the present invention facing each other via a separator and injecting an electrolyte. By assembling the secondary battery according to this configuration, the secondary battery according to the present invention can be manufactured.

The secondary battery according to the present invention having the thus obtained negative electrode contains the active material for a battery according to the present invention (or the composite active material for a battery according to the present invention), and thus the negative electrode containing the active material for a battery according to the present invention or the composite active material for a battery according to the present invention in particular can retain good initial Coulombic efficiency and cycle characteristics in use for lithium-ion secondary batteries, and in addition, can improve the discharge capacity to 800 mAh/g or more (half-cell measurement voltage range: 0.01-1.5 V), for example.

### <Method for Producing Active Material for Battery>

Although not limited to a particular method of production, when the silane compound is dissolved in an organic solvent, for example, the active material for a battery according to the present invention can be produced by a step of obtaining a precursor by removing and drying the organic solvent (production of the precursor), a step of obtaining a fired product by firing the obtained precursor in an inert atmosphere (firing of the precursor), and a step of obtaining an active material by pulverizing the obtained fired product (production of the active material).

### (Production of Precursor)

In the step of obtaining the precursor described above, the silane compound organic solvent is removed and dried. The work of solvent removal and drying for the purpose of distilling off the organic solvent is performed using a rotary evaporator or an apparatus having a heating part, a cooling part, and the like made of glass, metal, or the like that can perform vacuum or atmospheric pressure distillation and assembled with parts of a heating function, a cooling function, a pressure control function, and the like. In the drying work, a hot air dryer, a vacuum dryer, a spray dryer, or the like can be used.

In the production of the precursor containing the carbon material and the silicon particles as the components of the composite active material for a battery according to the present invention, a step of mixing them with the silane compound is necessary. Any method may be used in the means, and furthermore, there is no problem about the step being performed either before solvent removal or after solvent removal, which is not limited to a particular case. Representative examples thereof include a dry process and a wet process. Regardless of being the dry process or the wet process, fluidized stirring by stirring, shaking, vibration, gas inclusion, or the like or various other methods may be used. In the wet process, various dispersion methods can be further used. Representative examples thereof include DISPER, homogenizers, ball mills, bead mills, FILMIX, and ultrasonic homogenizers. Any dispersing agent or dispersing aid can also be used, and in dispersing means in such cases, the dispersing methods described above can also be used.

### (Addition of Alkali Metal Compound)

Alkali metal or alkaline earth metal compounds may be added to the precursor silane compound. The alkali metal or alkaline earth metal compounds are not limited to particular compounds. Examples thereof include lithium and magnesium metal compounds. The alkali metal or alkaline earth metal compounds may also be added as halogen compounds or organic complex compounds. By mixing the alkali metal or alkaline earth metal compounds and the silane compound with each other, an irreversible reaction of an electrochemical reaction present in the skeleton of the active material SiOC obtained by high-temperature firing may be a reaction with and chemically bonding to the alkali metal or alkaline earth metal compounds, thus producing the effect of improving the initial Coulombic efficiency along with a reduction in the relative amount of the irreversible reaction.

### (Firing of Precursor)

The step of obtaining the fired product is a step of high-temperature firing the precursor obtained in the above in an inert atmosphere. That is, in the firing of the precursor, thermally decomposable organic components are completely decomposed, and the other main components are made into a fired product suitable for the active material or the composite active material by the precise control of the firing conditions. Specifically, the SiOC skeleton structure is formed by the formation of reactive activation sites such as radical ends of Si, C, and O and reactive coordination bonds by the decomposition reaction of bonds such as Si-O and Si-C present in the precursor silane compound and the construction of newly formed bonds such as Si-O and Si-C by the reaction caused by the reactive activation sites. Furthermore, when the carbon source resin is contained, the homogenously dispersed carbon source resin is also carbonized and is thereby converted to the free carbon G in a three-dimensional structure having the SiOC skeleton.

### (Firing Conditions)

The firing conditions are not limited to particular conditions. Treating in an inert atmosphere at about 600°C or higher is preferred. Generally, firing is performed by heating in line with the program settings of an apparatus. The highest attainable temperature in firing is the highest temperature to be set and has a strong influence on the structure and performance of the fired product. The highest attainable temperature is preferably 1,000°C to 1,300°C and more preferably 1,050°C to 1,250°C. By performing firing in this temperature range, the chemical bonding state of the amorphous silicon-based material can be made finer, and thus more excellent charge-discharge characteristics can be obtained.

While the method of firing is not limited to a particular method, a reaction apparatus having a heating function in an atmosphere may be used, and processing by a continuous process or a batch process can be employed. As to the apparatus for firing, fluidized bed reactors, rotary furnaces, vertical moving bed reactors, tunnel furnaces, batch furnaces, rotary kilns, or the like can be selected as appropriate in accordance with the purpose.

Firing is preferably performed in an atmosphere not containing oxidizing gases and is preferably performed in an inert atmosphere such as nitrogen or argon or a reducing atmosphere such as a nitrogen/hydrogen gas mixture, pure hydrogen, or carbon monoxide.

### (Pre-Oxidation Treatment)

Pre-oxidation treatment may be performed prior to the firing of the precursor. This pre-oxidation treatment thermally decomposes the organic components of the silane compound more efficiently and can also activate specific chemical bonding sites. Furthermore, when silicon is contained, a thin oxide film can be imparted to the surface of silicon. It also increases chemical stability to an electrolyte when used for batteries, can prevent the exposure of the silicon surface, and has the effect of inhibiting the decomposition of the electrolyte. Thus, performing the pre-oxidation treatment can improve the cycle characteristics of the active material. As to pre-oxidation treatment conditions, a temperature range of 200°C to 450°C in the air is preferred, and 250°C to 400°C is more preferred.

### (Production of Active Material)

The step of obtaining the active material is pulverizing the fired product obtained in the above and performing classification as needed to obtain the active material. Pulverization may be performed in one step or performed in several steps for a desired particle size. For example, when the fired product is in a lump or agglomerated particles of 10 mm or more, and the active material of 10 um is to be produced, coarse pulverization is performed with a jaw crusher, a roll crusher, or the like to make particles of about 1 mm, which are then made to be 100 um with a glow mill, a ball mill, or the like, which are then pulverized to 10 µm with a bead mill, a jet mill, or the like. To remove coarse particles that may be contained in the particles produced by pulverization or when fine particles are removed to adjust particle size distribution, classification is performed. The classifier used is a wind power classifier, a wet classifier, or the like, which varies in accordance with the purpose. In removing coarse particles, a method of classification including sifting is preferred because it can surely achieve the purpose.

### <Method for Manufacturing Negative Electrode>

In the secondary battery according to the present invention, the negative electrode is obtained by applying slurry containing the active material for a battery according to the present invention or the composite active material for a battery according to the present invention as an essential component and other components such as organic binding agents (binders) and conductivity aids as needed onto a current collector copper foil to make a thin film. The negative electrode in the secondary battery according to the present invention can be obtained by kneading the active material for a battery or the composite active material for a battery according to the present invention described above and a binder as the organic binding agent together with a solvent with a dispersion apparatus such as a stirrer, a ball mill, a super sand mill, or a pressure kneader to prepare negative electrode material slurry, which is then applied to a current collector to form a negative electrode layer, for example. It can also be obtained by forming paste-like negative electrode material slurry into a sheet shape, a pellet shape, or the like and integrating it with the current collector.

### (Organic Adhesive: Binder)

The organic binding agent (binder) is not limited to a particular organic binding agent. Examples thereof include styrene-butadiene rubber copolymers (SBR); (meth)acrylic copolymers containing ethylenically unsaturated carboxylic acid esters (methyl (meth)acrylate, ethyl (meth)acrylate, butyl (meth)acrylate, (meth)acrylonitrile, and hydroxyethyl (meth)acrylate, for example) and ethylenically unsaturated carboxylic acids (acrylic acid, methacrylic acid, itaconic acid, fumaric acid, and maleic acid, for example); and polymer compounds such as polyvinylidene fluoride, polyethylene oxide, polyepichlorohydrin, polyphosphazene, polyacrylonitrile, polyimide, polyamideimide, and carboxymethylcellulose (CMC). Aqueous binders with high chemical stability can also be employed as the organic binding agent.

These organic binding agents (binders) are dispersed or dissolved in water or dissolved in an organic solvent such as N-methyl-2-pyrrolidone (NMP) depending on their physical properties. The content ratio of the organic binding agent in a negative electrode layer of a lithium-ion secondary battery negative electrode is preferably 1 to 30% by mass, more preferably 2 to 20% by mass, and even more preferably 3 to 15% by mass.

The content ratio of the organic binding agent (binder) being 1% by mass or more gives good adhesion and inhibits the destruction of a negative electrode structure due to expansion and contraction during charging and discharging. On the other hand, being 30% by mass or less inhibits an increase in electrode resistance.

### (Conductivity Aid)

The negative electrode material slurry may be mixed with a conductivity aid as needed. Examples of the conductivity aid include carbon black, graphite, acetylene black, and oxides and nitrides exhibiting conductivity. The use amount of the conductivity aid may be about 1 to 15% by mass with respect to the entire amount of the active material for a battery according to the present invention (or the composite active material for a battery according to the present invention).

### (Current Collector)

The material and shape of the current collector are not limited to particular ones, and a strip of copper, nickel, titanium, stainless steel, or the like formed into a foil shape, a perforated foil shape, a mesh shape, or the like may be used. Porous materials such as porous metal (foamed metal) and carbon paper can also be used.

The method for applying the negative electrode material slurry to the current collector is not limited to a particular method. Examples thereof include known methods such as metal mask printing, electrostatic coating, dip coating, spray coating, roll coating, doctor blading, gravure coating, and screen printing. After the application, rolling treatment with a flat press, a calender roll, or the like is preferably performed as needed. Integration of the negative electrode material slurry formed into a sheet shape, a pellet shape, or the like with the current collector can be performed by known methods such as rolling, pressing, or a combination of these methods.

The negative electrode layer formed on the current collector and the negative electrode layer integrated with the current collector are preferably heat treated in accordance with the used organic binding agent. For example, when a known and customary water-based styrene-butadiene rubber copolymer (SBR) or the like is used, heat treatment may be performed at 100 to 130°C, whereas when an organic binding agent with polyimide or polyamideimide as its main skeleton is used, heat treatment is preferably performed at 150 to 450°C.

This heat treatment advances removal of the solvent and higher strength due to the hardening of the binder, which can improve adhesion between particles and between the particles and the current collector. This heat treatment is preferably performed in an inert atmosphere such as helium, argon, or nitrogen or a vacuum atmosphere in order to prevent oxidation of the current collector during the treatment.

The negative electrode is preferably pressed (subjected to pressurization) after the heat treatment. The negative electrode containing the active material for a battery according to the present invention (or the composite active material for a battery according to the present invention) has an electrode density of preferably 1.0 to 1.8 g/cm3, more preferably 1.1 to 1.7 g/cm3, and even more preferably 1.2 to 1.6 g/cm³. As to the electrode density, although higher density tends to improve adhesion and the volume capacity density of the electrode, extremely high density reduces the number of voids in the electrode, thereby weakening the volume expansion inhibition effect of silicon or the like, thus reducing cycle characteristics.

### <Positive Electrode>

The positive electrode can be obtained by forming a positive electrode layer on the surface of a current collector, similarly to the negative electrode. For the current collector of this case, a strip of metal or alloy such as aluminum, titanium, or stainless steel formed into a foil shape, a perforated foil shape, a mesh shape, or the like can be used.

The positive electrode material for use in the positive electrode layer is not limited to a particular material. Among nonaqueous electrolyte secondary batteries, when a lithium-ion secondary battery is produced, metal compounds, metal oxides, metal sulfides, or conductive polymer materials capable of doping or intercalating lithium ions may be used, for example, with no particular limitations. Examples thereof include lithium cobaltate (LiCoO₂), lithium nickelate (LiNiO₂), lithium manganate (LiMnO₂), their composite oxides (LiCoxNiyMnzO₂, x + y + z = 1), lithium manganese spinel (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine type LiMPO₄ (M: Co, Ni, Mn, and Fe), conductive polymers such as polyacetylene, polyaniline, polypyrrole, polythiophene, and polyacene, and porous carbon, which can be used singly or in mixture.

### <Separator>

As the separator, nonwoven fabrics, cloth, microporous films, or combinations thereof mainly made of polyolefins such as polyethylene and polypropylene can be used, for example. When a structure in which the positive electrode and the negative electrode of the nonaqueous electrolyte secondary battery to be produced are not in direct contact is employed, there is no need to use any separator.

### <Electrolyte>

As the electrolyte, for example, what is called an organic electrolyte can be used, in which a lithium salt such as LiClO₄, LiPF₆, LiAsF₆, LiBF₄, or LiSO₃CF₃ is dissolved in a nonaqueous solvent as a single body or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyl tetrahydrofuran, 1,3-dioxolane, methyl acetate, or ethyl acetate.

### <Secondary Battery>

The secondary battery according to the present invention is used as, with no particular limitations, paper batteries, button batteries, coin batteries, laminated batteries, cylindrical batteries, square batteries, and the like. The active material for a lithium-ion secondary battery negative electrode according to the present invention described above can also be applied to electrochemical apparatuses in general using insertion and desorption of lithium ions as a charge-discharge mechanism, such as hybrid capacitors and solid lithium secondary batteries.

### [Examples]

The following introduces some representative examples of actual production and evaluation of the active material for a battery according to the present invention. As described above, the methods of production and evaluation are not limited to these examples.

### (Synthesis Example 1: Synthesis of Polysiloxane Precursor)

A mixture solution of 21.8 g of trimethoxymethylsilane (MeSi(OMe)3), 9.8 g of dimethoxydiphenylsilane (Ph2Si(OMe)2), and 34 g of isopropyl alcohol (IPA) was heated up to 70°C while stirring under a nitrogen atmosphere. When the temperature stabilized, 4.2 g of pure water and 0.17 g of an IPA solution of 1% phosphate were added thereto and the mixture was reacted for 4 hours. Then, the reactant was heated up to 130°C, and IPA and water were distilled off until they were completely removed to obtain a polysiloxane precursor. The ratios (mol%) of the respective siloxanes in the polysiloxane precursor are as listed in Table 3.

### (Synthesis Examples 2 to 7: Synthesis of Polysiloxane Precursors)

All was performed in the same manner as in Synthesis Example 1 except that in Synthesis Example 1, trimethoxymethylsilane (MeSi(OMe)3) and dimethoxydiphenylsilane (Ph2Si(OMe)2) were replaced with trimethoxymethylsilane (MeSi(OMe)3), trimethoxyphenylsilane (PhSi(OMe)3), dimethoxydimethylsilane (Me2Si(OMe)2), and dimethoxydiphenylsilane (Ph2Si(OMe)2), with the respective weights being the values listed in Table 1. The ratios (mol%) of the respective siloxanes in the polysiloxane precursor are as listed in Table 3.

### (Synthesis Examples 8 and 9: Synthesis of Precursors)

All was performed in the same manner as in Synthesis Example 1 except that in Synthesis Example 1, the mixture solution of trimethoxymethylsilane (MeSi(OMe)3), dimethoxydiphenylsilane (Ph2Si(OMe)2), and isopropyl alcohol (IPA) was replaced with a mixture solution of polydimethylsiloxane with hydroxysilane (SiH-containing PDMS), 1,3,5,7-tetramethyl 1,3,5,7-tetravinylcyclotetrasiloxane, and 1,4-bis(dimethylvinylsilyl)benzene, with the respective weights being the values listed in Table 2, and 34 g of toluene. The ratios (mol%) of the respective siloxanes in the polysiloxane precursor are as listed in Table 3.

### (Comparative Synthesis Examples 1 and 2: Synthesis of Polysiloxane Precursors)

All was performed in the same manner as in Synthesis Example 1 except that in Synthesis Example 1, trimethoxymethylsilane (MeSi(OMe)3) and dimethoxydiphenylsilane (Ph2Si(OMe)2) were replaced with trimethoxymethylsilane (MeSi(OMe)3) and trimethoxyphenylsilane (PhSi(OMe)3), with the respective weights being the values listed in Table 2. The ratios (mol%) of the respective siloxanes in the polysiloxane precursor are as listed in Table 3.

### (Comparative Synthesis Examples 3 and 4: Synthesis of Precursors)

All was performed in the same manner as in Synthesis Example 8 except that in Synthesis Example 8, the respective weights of polydimethylsiloxane with hydroxysilane (SiH-containing PDMS), 1,3,5,7-tetramethyl 1,3,5,7-tetravinylcyclotetrasiloxane, and 1,4-bis(dimethylvinylsilyl)benzene were the values listed in Table 2. The ratios (mol%) of the respective siloxanes in the polysiloxane precursor are as listed in Table 3.

**[Table 1]**

| Sample name | MeSi(OMe)3 (g) | PhSi(OMe)3 (g) | Me2Si(OMe)2 (g) | Ph2Si(OMe)2 (g) |
|---|---|---|---|---|
| Synthesis Example 1 | 21.8 | 0.0 | 0.0 | 9.8 |
| Synthesis Example 2 | 34.2 | 8.3 | 5.0 | 0.0 |
| Synthesis Example 3 | 23.5 | 10.0 | 13.4 | 0.0 |
| Synthesis Example 4 | 19.5 | 13.1 | 15.1 | 0.0 |
| Synthesis Example 5 | 24.9 | 0.0 | 11.6 | 0.0 |
| Synthesis Example 6 | 27.7 | 0.0 | 9.1 | 0.0 |
| Synthesis Example 7 | 32.7 | 11.9 | 0.0 | 0.0 |

**[Table 2]**

| Sample name | SiH-containing PDMS (KF-99) (g) | Tetramethyltetravinyl cyclotetrasiloxane (g) | 1,4-Bis(dimethylvinylsilyl)benzene (g) |
|---|---|---|---|
| Synthesis Example 8 | 14.4 | 2.6 | 3.7 |
| Synthesis Example 9 | 14.4 | 5.2 | 0.0 |
| Sample name | MeSi(OMe)3 (g) | PhSi(OMe)3 (g) | |
| Comparative Synthesis Example 1 | 0.0 | 39.7 | |
| Comparative Synthesis Example 2 | 5.4 | 31.7 | |
| Sample name | SiH-containing PDMS (KF-99) (g) | Tetramethyltetravinyl cyclotetrasiloxane (g) | 1,4-Bis(dimethylvinylsilyl)benzene (g) |
| Comparative Synthesis Example 3 | 11.5 | 4.4 | 7.0 |
| Comparative Synthesis Example 4 | 9.7 | 5.9 | 8.5 |

### (Examples 1 to 9 and Comparative Examples 1 to 4: Production of Active Materials)

Each of the silane compound precursors obtained in Synthesis Examples 1 to 9 and Comparative Synthesis Examples 1 to 4 was fired at 800°C for 2 hours under a nitrogen gas flow and was then further fired at 1,100°C for 6 hours under a nitrogen gas flow. After being pulverized with a mortar, this was further pulverized with a bead mill so as to have a size of about 5 to 10 um to obtain each active material.

### (Example 10: Production of Precursor Composite and Active Material)

In Synthesis Example 2, the reaction solution after the end of the reaction, from which IPA and water were distilled off under reduced pressure at 70°C, was concentrated to end the processing with a NV of 60%. To 100 g of the concentrate, 30 g of artificial graphite powder with an average particle size of 1 micron was added and was dispersed with DISPER. The solvent was then completely distilled off at 110°C and was vacuum dried at 110°C to obtain a polysiloxane precursor containing graphite.

The precursor was fired at 800°C for 2 hours under a nitrogen gas flow and was then further fired at 1,100°C for 6 hours under a nitrogen gas flow. After being pulverized with a mortar, this was further pulverized with a bead mill so as to have a size of about 5 to 10 um to obtain each active material.

### (Example 11: Production of Precursor Composite and Active Material)

All was performed in the same manner as in Example 10 except that 10 g of a commercially available product of Si particles with an average particle size of 100 nm was added to a mixture solution obtained by adding 30 g of graphite powder with an average particle size of 1 micron to 100 g of the concentrate after being synthesized in Example 10.

### (Comparative Example 5)

All was performed in the same manner as in Example 10 except that the reaction solution after the end of the reaction in Comparative Synthesis Example 3 was used in place of the reaction solution of Synthesis Example 2 used in Example 10.

### (Comparative Example 6)

All was performed in the same manner as in Example 11 except that the reaction solution after the end of the reaction in Comparative Synthesis Example 3 was used in place of the reaction solution of Synthesis Example 2 used in Example 11.

### (Methods of ²⁹Si-NMR Measurement and Analysis)

A sample of each of the active materials of Examples 1 to 12 and Comparative Examples 1 to 6 was collected in a ϕ4mm solid-state NMR sample tube and was subjected to single pulse measurement with a solid-state NMR analyzer (JNM-ECA600 manufactured by JEOL RESONANCE). The obtained solid-state ²⁹Si-NMR spectral data was Fourier transformed with Delta 5, and the obtained data was subjected to waveform separation by ACD Labs software using the Gaussian + Lorentzian functions. Based on the peak areas obtained by the waveform separation, the ratio (A/B) between the total value A of the respective peak integral values attributed to SiOC₃, SiO₂C₂, and SiO₃C and the peak integral value B attributed to SiO₄ was calculated in a chemical shift range of 20 ppm to -150 ppm. Tables 4 and 5 list the calculated results of A/B.

### (Characteristics Evaluation of Active Materials)

When a sample of each of the active materials of Examples 1 to 12 and Comparative Examples 1 to 6 was heated up to 1,000°C in the air with a thermogravimetric differential thermal analyzer TG/DTA (model number "Thermo plus EVO₂" manufactured by RIGAKU), a temperature at which a weight reduction started due to thermal decomposition and a weight reduction rate due to the thermal decomposition were determined to be a released carbon (free carbon) amount, and a thermal decomposition starting temperature was determined from the measurement result. Tables 4 and 5 list the free carbon amount.

Furthermore, for a sample of each of the active materials of Examples 1 to 9 and Comparative Examples 1 to 4, G/D, or a ratio between peak intensity D near 1,320 cm⁻¹ (the D band) and peak intensity G near 1,595 cm⁻¹ (the G band), was evaluated with a Raman spectrometer (model number "NRS-5500" manufactured by JASCO Corporation). Tables 4 and 5 list G/D.

### (Production and Evaluation of Electrodes and Batteries)

Mixed together were 800 mg of each of the active materials of Examples 1 to 11 and Comparative Examples 1 to 6, 100 mg of acetylene black (a conductivity aid), 25 mg of carboxymethyl cellulose, and 1,000 mg of pure water, and the mixture was stirred at 2,000 rpm for 5 minutes using Awatori Rentaro and was then defoamed for 0.5 minute. Subsequently, 75 mg of styrene-butadiene rubber (a binder) and 100 mg of pure water were added thereto, and the mixture was stirred at 2,000 rpm for 5 minutes using Awatori Rentaro and was then defoamed for 0.5 minute to obtain slurry.

The slurry was applied onto a copper plate so as to give a film thickness of 60 µm and was dried on a hot plate heated to 70°C for 5 minutes. It was then cut into a circle with a diameter of 14 mm and was vacuum dried at 110°C to produce an electrode as the negative electrode.

Using the negative electrode produced as described above and a positive electrode as a Li metal foil, the negative electrode and the positive electrode were faced each other via a 25 um polypropylene separator, to which an electrolyte (1 mol/L LiPF6, diethyl carbonate:ethylene carbonate = 1:1 (volume ratio)) was adsorbed to produce a half cell for evaluation.

Charging and discharging were performed 10 times under the following cutoff voltage and charge-discharge rate conditions to evaluate charge-discharge characteristics. Initial efficiency and a capacity retention rate (10 times) were determined as follows. Tables 4 and 5 list the evaluation results.
Cutoff voltage range: 0.005 to 1.5 V
Charge-discharge rate: 0.1C (initial to third cycle) and 0.2C (fourth and later cycles)
Initial efficiency (%) = initial discharge capacity (mAh/g)/initial charge capacity (mAh/g)
Capacity retention rate (10th) = 10th discharge capacity (mAh/g)/initial discharge capacity (mAh/g)

**[Table 3]**

| | SiO2C2 (mol%) | SiO3C (mol%) | SiO4 (mol%) | (SiO3C+SiO2C2)/SiO4 |
|---|---|---|---|---|
| Example 1 | 19 | 19 | 58 | 0.64 |
| Example 2 | 14 | 23 | 44 | 0.84 |
| Example 3 | 15 | 22 | 51 | 0.72 |
| Example 4 | 15 | 19 | 51 | 0.68 |
| Example 5 | 18 | 22 | 49 | 0.82 |
| Example 6 | 21 | 22 | 47 | 0.92 |
| Example 7 | 16 | 22 | 46 | 0.83 |
| Example 8 | 23 | 41 | 20 | 3.14 |
| Example 9 | 24 | 46 | 18 | 3.89 |
| Comparative Example 1 | 14 | 11 | 75 | 0.33 |
| Comparative Example 2 | 12 | 17 | 59 | 0.48 |
| Comparative Example 3 | 23 | 49 | 16 | 4.39 |
| Comparative Example 4 | 18 | 53 | 15 | 4.86 |

**[Table 4]**

| | (SiO3C+SiO2C2)/ SiO4 | Free carbon amount (%) (in air) | Thermal decompositi on starting temperature (°C) | G/D (Raman spectrosco py) 0.00 | Initial discharge capacity (mAh/g) | Initial efficien cy (%) | Capacity retentio n rate (10 cycles) (%) |
|---|---|---|---|---|---|---|---|
| Example 1 | 0.64 | 20.2 | 577 | 0.79 | 881 | 63.7 | 89.5 |
| Example 2 | 0.84 | 4.9 | 776 | 0.74 | 963 | 63.9 | 88.8 |
| Example 3 | 0.72 | 8.6 | 724 | 0.74 | 948 | 64.4 | 89.4 |
| Example 4 | 0.68 | 12.3 | 710 | 0.75 | 915 | 64.9 | 92.0 |
| Example 5 | 0.82 | 1.9 | 709 | 0.75 | 928 | 63.2 | 88.9 |
| Example 6 | 0.92 | 1.0 | 705 | 0.75 | 932 | 61.1 | 88.5 |
| Example 7 | 0.83 | N.D. | N.D. | N.D. | 935 | 60.2 | 88.3 |
| Example 8 | 3.14 | 3.3 | 580 | 0.78 | 966 | 64.8 | 88.2 |
| Example 9 | 3.89 | N.D. | N.D. | N.D. | 965 | 67.8 | 88.7 |
| Comparative Example 1 | 0.33 | 45.6 | 449 | 0.89 | 572 | 53.0 | 86.6 |
| Comparative Example 2 | 0.48 | 30.2 | 536 | 0.86 | 707 | 58.7 | 86.9 |
| Comparative Example 3 | 4.39 | 2.8 | 583 | 0.73 | 967 | 65.0 | 83.3 |
| Comparative Example 4 | 4.86 | 3.2 | 576 | 0.74 | 969 | 65.5 | 81.2 |

**[Table 5]**

| | (SiO2C2+SiO3C)/S iO4 | Free carbon amount (%) (in air) | Thermal decompositi on starting temperature (°C) | G/D (Raman spectroscop y) | Initial discharg e capacity (mAh/g) | Initial efficien cy (%) | Capacity retentio n rate (10 cycles) (%) |
|---|---|---|---|---|---|---|---|
| Example 10 | 0.84 | 26.8 | 773 | 0.74 | 779 | 66.6 | 91.2 |
| Example 11 | 0.84 | 3.8 | 781 | 0.74 | 881 | 70.8 | 88.5 |
| Comparative Example 5 | 4.39 | 2.8 | 579 | 0.73 | 781 | 67.3 | 84.6 |
| Comparative Example 6 | 4.39 | 2.2 | 586 | 0.73 | 784 | 71.7 | 82.9 |

## Claims

1. An active material for a battery being an amorphous silicon-based material comprising elements including Si, O, and C,
the active material having a ratio (A/B) between a total value A of respective peak integral values attributed to SiO₂C₂ and SiO₃C and a peak integral value B attributed to SiO₄ of 0.5 or more and 5.0 or less in a chemical shift range of 20 ppm to -150 ppm in a solid-state ²⁹Si-NMR spectrum.

2. The active material for a battery according to claim 1, wherein the active material has a weight reduction starting temperature of 550°C or higher when the active material is thermally decomposed in air.

3. The active material for a battery according to claim 1 or 2, wherein the active material has a weight reduction of 2 wt% or more and 30 wt% or less when the active material is thermally decomposed in air.

4. The active material for a battery according to any one of claims 1 to 3, wherein the active material has a peak intensity ratio (G/D) between G-band of carbon positioned near 1,595 cm⁻¹ and D-band of carbon positioned near 1,320 cm⁻¹ of 0.8 or less in a Raman spectrum of the active material.

5. A secondary battery comprising the active material according to any one of claims 1 to 4 in a negative electrode.

6. A composite active material for a battery, the composite active material comprising the active material according to any one of claims 1 to 4 in part of a component.

7. A composite active material for a battery, the composite active material comprising at least one carbon material selected from graphite, low-crystallinity carbon, and amorphous carbon in a component of the composite active material according to claim 6.

8. A composite active material for a battery, the composite active material comprising silicon particles with an average particle size of 150 nm or less in a component of the composite active material according to claim 6 or 7.

9. A secondary battery comprising the composite active material according to any one of claims 6 to 8 in a negative electrode.
